# EUROPEAN PATENT SPECIFICATION

(11) **EP 4 282 628 B1**
(45) Date of publication and mention of the grant of the patent: **01.04.2026**
(21) Application number: 22762974.8
(22) Date of filing: 16.02.2022
(51) Int. Cl.: B29C 70/20, B29C 70/22, B29C 70/54, B29B 11/16, B32B 5/26, B32B 27/12, B29C 70/08, B29C 70/24

(54) **PREFORM STRUCTURE, FIBER-REINFORCED PLASTIC, AND PRODUCTION METHOD FOR PREFORM STRUCTURE**
VORFORMSTRUKTUR, FASERVERSTÄRKTER KUNSTSTOFF UND HERSTELLUNGSVERFAHREN FÜR VORFORMSTRUKTUR
STRUCTURE DE PRÉFORME, PLASTIQUE RENFORCÉ PAR DES FIBRES ET PROCÉDÉ DE PRODUCTION DE STRUCTURE DE PRÉFORME

(30) Priority: 02.03.2021 JP 2021032865
(43) Date of publication of application: 29.11.2023
(73) Proprietor: LINTEC CORPORATION, Itabashi-ku Tokyo 173-0001 (JP)
(72) Inventor: HAGIHARA Yoshiaki, Tokyo 173-0001 (JP)
(74) Representative: Gille Hrabal Partnerschaftsgesellschaft mbB Patentanwälte
(86) International application number: PCT/JP2022/006160
(87) International publication number: WO 2022/185918

(56) References cited:
- WO-A2-2018/199256
- US-A- 4 786 541
- US-A1- 2005 059 309
- US-A1- 2010 021 682
- US-A1- 2010 021 682
- US-A1- 2013 142 988
- US-A1- 2020 139 651
- US-A1- 2020 307 153

## Description

### TECHNICAL FIELD

The present invention relates to a preform structure, a fiber-reinforced plastic, and a production method for a preform structure.

### BACKGROUND ART

A known example of a fiber-reinforced plastic is one in which a preform structure including reinforcing fibers, such as carbon fibers or glass fibers, is embedded in a resin body. Fiber-reinforced plastics are used in various fields such as sporting goods, leisure goods, materials for automobiles, materials for aircraft, and electronic device components.

As the reinforcing fibers, carbon fibers, which have particularly high strength, are used when high strength is required. However, since carbon fibers are less likely to be processed into freely chosen shapes, a carbon fiber cloth is used in the case of use in a preform structure.

Meanwhile, various forms of preform structures using reinforcing fibers, such as carbon fibers, have been studied. For example, Patent Literature 1 discloses a preform structure in which two or more layers prepared by aligning bundles of reinforcing fibers such that the longitudinal directions thereof are arranged in one direction are stacked such that the longitudinal directions of the bundles of reinforcing fibers are different from each other. In this preform structure, an auxiliary thread is used as means for restraining the positions of the bundles of reinforcing fibers. Patent Literature 2 discloses according to its abstract, methods of making a composite material that includes (a) providing at least one sheet which includes woven or non-woven glass fibers, carbon fibers, aramid fibers, or nanoscale fibers; and (b) stitching a plurality of stitches of a thermally conductive fiber through the at least one sheet in a Z-axis direction to form paths of higher conductivity through the sheet of material to increase its thermal conductivity in the Z-axis.

### CITATION LIST

### PATENT LITERATURE

Patent Literature 1: International Publication No. WO2016/147646
Patent Literature 2: US 2010/021682 A1

### SUMMARY OF THE INVENTION

### PROBLEMS TO BE SOLVED BY THE INVENTION

In the preform structure disclosed in Patent Literature 1, the layers composed of bundles of reinforcing fibers can be stacked such that the angle of the bundles of reinforcing fibers in the longitudinal direction shifts. However, since designs other than the above cannot be drawn, there is a problem in that design flexibility for improving the strength is low. In view of this, a preform structure having higher design flexibility is desired. In the preform structure disclosed in Patent Literature 1, glass fibers, polyester fibers, nylon fibers, and the like are used as the materials of the auxiliary thread. However, since carbon fibers are not used as the auxiliary thread, there is a problem in that the entire structure cannot be composed of carbon-based materials. There is also a problem in that the compatibility with an impregnating resin may be poor depending on the material of the auxiliary thread.

An object of the invention is to provide a preform structure including a carbon fiber and having high design flexibility, a fiber-reinforced plastic, and a production method for the preform structure.

### MEANS FOR SOLVING THE PROBLEMS

According to an aspect of the invention, there is provided a preform structure including a carbon fiber, a support layer that serves as a substrate for the carbon fiber, and a carbon-based thread for securing the carbon fiber to the support layer, wherein the carbon-based thread is a yarn obtained by spinning two or more carbon nanotube yarns together, and the yarn obtained by the spinning two or more carbon nanotube yarns is in a Z-spin.

**In** the preform structure according to the above aspect of the invention, the support layer is preferably at least one selected from the group consisting of a glass fiber cloth, a carbon fiber cloth, a resin cloth, and a resin film.

**In** the preform structure according to the above aspect of the invention, the support layer is preferably at least one selected from the group consisting of a glass fiber cloth and a carbon fiber cloth.

**In** the preform structure according to the above aspect of the invention, the support layer is preferably at least one selected from the group consisting of a resin cloth and a resin film.

According to another aspect of the invention, there is provided a fiber-reinforced plastic including the preform structure according to the above aspect of the invention; and a resin with which the preform structure is impregnated.

According to still another aspect of the invention, there is provided a fiber-reinforced plastic including the preform structure according to the above aspect of the invention; and a resin with which the preform structure is impregnated, in which a resin that is a material of the resin cloth or the resin film and the resin with which the preform structure is impregnated are the same material.

According to a further aspect of the invention, there is provided a production method for a preform structure, the method being a production method for the preform structure according to the above aspect of the invention, the method including disposing the carbon fiber on the support layer and securing the carbon fiber to the support layer with the carbon-based thread.

**In** the production method for a preform structure according to the above aspect of the invention, the carbon fiber is preferably secured to the support layer by sewing with the carbon-based thread.

In the production method for a preform structure according to the above aspect of the invention, the carbon fiber is preferably secured to the support layer using an embroidery machine.

In the production method for a preform structure according to the above aspect of the invention, the carbon-based thread preferably has a tensile strength of 500 MPa or more.

According to the above aspects of the invention, it is possible to provide a preform structure including a carbon fiber and having high design flexibility, a fiber-reinforced plastic, and a production method for the preform structure.

### BRIEF DESCRIPTION OF DRAWINGS

Fig. 1 is a schematic view illustrating a preform structure according to a first exemplary embodiment of the invention.
Fig. 2 is a schematic view illustrating an example of a support layer used in the first exemplary embodiment of the invention.
Fig. 3 is a schematic view illustrating a state where a prepreg is produced using the preform structure according to the first exemplary embodiment of the invention.
Fig. 4 is a schematic view illustrating a fiber-reinforced plastic according to the first exemplary embodiment of the invention.

### DESCRIPTION OF EMBODIMENTS

### First exemplary embodiment

Hereinafter, the invention will be described with reference to an exemplary embodiment on the basis of the drawings. The invention is not limited to the exemplary embodiment. In the drawings, some parts are enlarged or reduced for ease of explanation.

### Preform structure

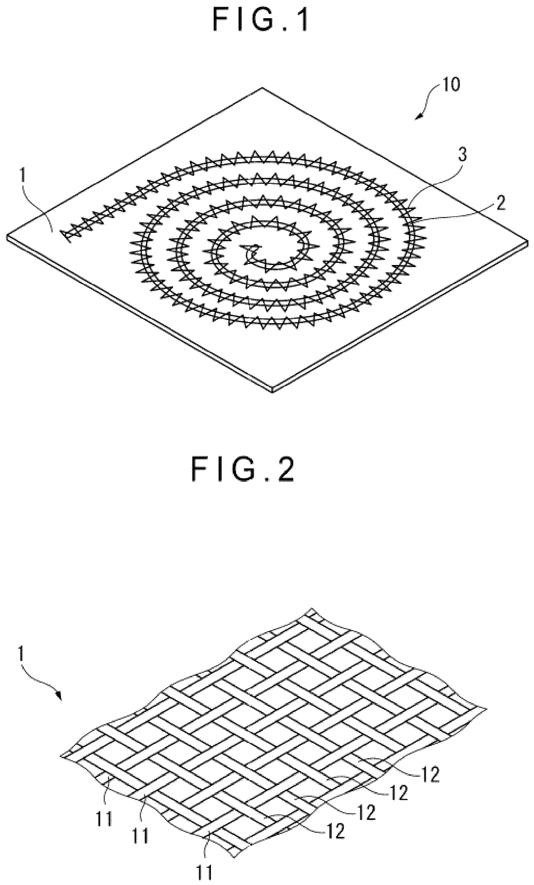

A preform structure 10 according to a first exemplary embodiment of the invention includes a carbon fiber 2, a support layer 1 that serves as a substrate for the carbon fiber 2, and a carbon-based thread 3 for securing the carbon fiber 2 to the support layer 1, as illustrated in Fig. 1.

In this manner, the carbon fiber 2 is disposed on the support layer 1 in a flexible design and secured with the carbon-based thread 3. The carbon fiber 2 is usually used as a carbon fiber cloth; however, in the exemplary embodiment, the carbon fiber 2 can be used for the preform structure 10 in a form other than a cloth. Therefore, design flexibility for the carbon fiber 2 can be enhanced. For example, in a case where the support layer 1 is a carbon fiber cloth, when the carbon fiber 2 is stacked on this support layer 1 in a flexible design, preform structures having different designs of carbon fibers can be stacked.

### Support layer

The support layer 1 is a layer that serves as a substrate for the carbon fiber 2. The carbon fiber 2 can be disposed on the support layer 1 in a flexible design.

Examples of the support layer 1 include glass fiber cloths, carbon fiber cloths, resin cloths, and resin films. Of these, glass fiber cloths and carbon fiber cloths are preferred in view of the strength of the preform structure 10. Carbon fiber cloths are particularly preferred from the viewpoint that the whole of the preform structure 10 can be composed of carbon-based materials.

When the support layer 1 is a glass fiber cloth or a carbon fiber cloth, the support layer 1 may be, for example, a cloth woven with warp threads 11 and weft threads 12, as illustrated in Fig. 2. With such a cloth, the carbon-based thread 3 can be passed through the weave texture of the cloth, so that the carbon fiber 2 can be secured with the carbon-based thread 3.

### Carbon fiber

The carbon fiber 2 is a fiber obtained by subjecting a precursor of an organic fiber to heating carbonization treatment, 90% or more of the fiber being composed of carbon by mass ratio. The carbon fiber 2 can be produced by carbonizing, at high temperature, an acrylic fiber or pitch (byproducts of petroleum, coal, coal tar, and the like) serving as a raw material.

Examples of the carbon fiber 2 include PAN-based carbon fibers (carbon fibers using acrylic fibers) and pitch-based carbon fibers (carbon fibers using pitch).

### Carbon-based thread

The carbon-based thread 3 is a thread that can penetrate the support layer 1 and that includes fibers composed of a carbon-based material. Note that the carbon fiber 2 described above is not included in the carbon-based thread 3. The carbon fiber 2 is short of flexibility, and unlike threads, the carbon fiber 2 cannot be used for sewing. In contrast, the carbon-based thread 3 can be passed through the weave texture of a carbon fiber cloth or the like, so that the carbon fiber 2 can be secured with the carbon-based thread 3.

With such a carbon-based thread 3, the use of a carbon fiber cloth as the support layer 1 enables all the materials of the preform structure 10 to be carbon-based materials. In addition, the strength of the preform structure 10 can be further improved.

Examples of the carbon-based thread 3 include carbon nanotube yarns and carbon nanotube composite yarns (hereinafter also referred to as "CNT composite yarns") of a resin and a carbon nanotube yarn.

A carbon nanotube yarn is obtained, for example, in the form of a filamentous linear body, by drawing carbon nanotubes in the form of a sheet from an end portion of a carbon nanotube forest (which is a growth body obtained by growing a plurality of carbon nanotubes on a base plate so as to be oriented in a direction perpendicular to the base plate and which is also referred to as an "array"), bundling the drawn carbon nanotube sheet, and then spinning a bundle of carbon nanotubes. Alternatively, a carbon nanotube yarn can be obtained by, for example, performing spinning from a dispersion liquid of carbon nanotubes. The production of a carbon nanotube linear body by spinning can be performed by, for example, the method disclosed in U.S. Patent Application Publication No. 2013/0251619 (JP 2012-126635 A). From the viewpoint of obtaining a carbon nanotube yarn with high purity, a carbon nanotube yarn is preferably obtained by spinning a carbon nanotube sheet. The carbon nanotube yarn may be a yarn obtained by spinning two or more carbon nanotube yarns together.

Examples of the CNT composite yarns include: (1) yarns obtained by, in the process of obtaining a carbon nanotube yarn, the process including drawing carbon nanotubes in the form of a sheet from an end portion of a carbon nanotube forest, bundling the drawn carbon nanotube sheet, and then spinning a bundle of carbon nanotubes, forming a resin film on a surface of the forest, sheet, bundle, or spun yarn of carbon nanotubes; (2) CNT composite yarns obtained by spinning a bundle of carbon nanotubes together with a yarn composed of another material; and (3) CNT composite yarns obtained by spinning a carbon nanotube yarn or a CNT composite yarn with a yarn composed of another material. The CNT composite yarns (3) are composite yarns obtained by braiding two yarns but may be composite yarns obtained by spinning three or more yarns together as long as at least one carbon nanotube or CNT composite yarn is included.

When a CNT composite yarn is used as the carbon-based thread 3, the resin used in the CNT composite yarn is preferably a resin with which the preform structure 10 is impregnated. Such a resin can be a resin that is the same as a resin of a resin layer 4 described later, and thus the CNT composite yarn is easily impregnated with the resin.

When the carbon-based thread 3 is a spun yarn, the Z-spin (left spin) is preferred. In a case of the Z-spin, unwinding of the thread can be reduced when sewing is performed with the carbon-based thread 3 using an embroidery machine.

The diameter of the carbon-based thread 3 (in a case of a spun yarn, the diameter of the spun yarn) is preferably in a range from 50 µm to 1,000 µm. When the diameter of the carbon-based thread 3 is within the above range, the carbon fiber 2 can be more reliably secured with the carbon-based thread 3.

The carbon-based thread 3 preferably has a tensile strength of 500 MPa or more. When the tensile strength is 500 MPa or more, a problem such as thread breakage during sewing with the carbon-based thread 3 can be prevented.

The tensile strength of the carbon-based thread 3 can be measured by the following method. Specifically, the carbon-based thread 3 is cut with a cutter to have a length of 4 cm, and portions of 1.5 cm from each end of the carbon-based thread 3 are fixed to a paperboard with an adhesive (Aron Alpha EXTRA4020, manufactured by Toagosei Co., Ltd.) such that a measurement length is 1 cm to prepare a specimen. The following tensile test is performed using this specimen to measure the tensile strength.

### Tensile test

For each specimen, a tensile strength at which the linear material is broken under the following conditions is measured.

### Conditions

Tensile-compression tester: "RTG-1225" manufactured by A&D Company, Limited.
Tensile rate: 1 mm/min
Temperature and humidity: 23 degrees C, 50%RH

### Production method for preform structure

Next, a production method for a preform structure according to the exemplary embodiment will be described.

The production method for a preform structure according to the exemplary embodiment is a production method for the above-described preform structure according to the exemplary embodiment, the method including disposing a carbon fiber 2 on a support layer 1 and securing the carbon fiber 2 to the support layer 1 with a carbon-based thread 3.

In the securing, first, a carbon fiber 2 is disposed on the support layer 1.

Here, the carbon fiber 2 can be arranged in various shapes. The shape of the carbon fiber 2 may be a spiral shape as illustrated in Fig. 1, but is not limited to this.

Examples of the shape of the carbon fiber 2 include circular shapes, elliptical shapes, angular shapes (such as triangular, rectangular, pentagonal, and hexagonal shapes), star shapes, wavy shapes, and linear shapes.

The number of carbon fibers 2 is not particularly limited and is preferably one or more, in view of strength, more preferably two or more.

In the securing, next, the carbon fiber 2 is secured to the support layer 1 with a carbon-based thread 3.

As the method for securing the carbon fiber 2 with the carbon-based thread 3, a publicly known method can be appropriately employed. For example, the method may be a method of securing the carbon fiber 2 to the support layer 1 by sewing with the carbon-based thread 3. The sewing method may be hand sewing or a method using a machine. Examples of the machine used here include sewing machines and embroidery machines. Of these, embroidery machines are preferably used.

### Fiber-reinforced plastic

Next, a fiber-reinforced plastic according to the exemplary embodiment will be described.

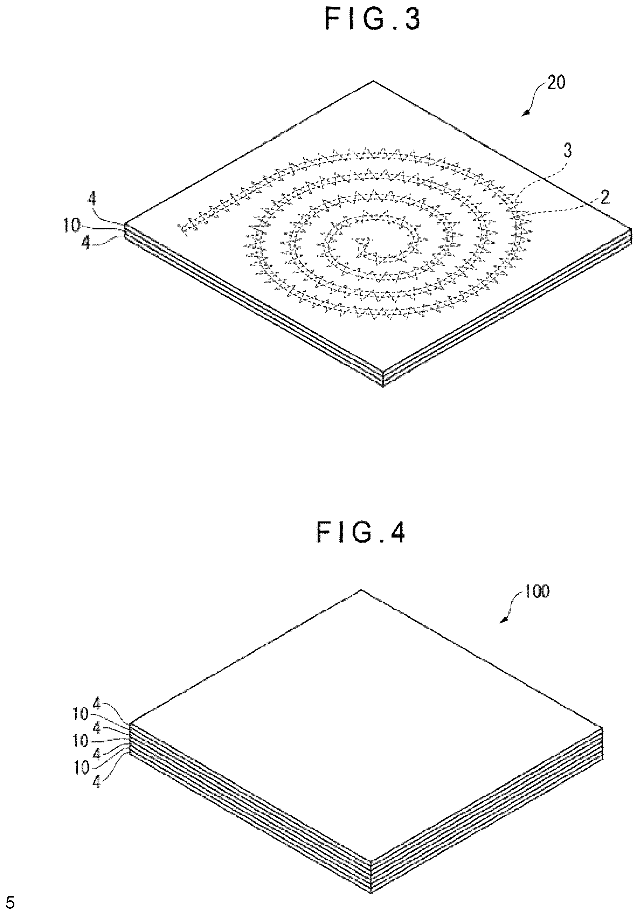

A fiber-reinforced plastic 100 (see Fig. 4) according to the exemplary embodiment includes the above-described preform structure 10 according to the exemplary embodiment and a resin with which the preform structure 10 is impregnated.

Examples of the resin used here include thermosetting resins and thermoplastic resins.

Examples of thermosetting resins include epoxy resins, polyester resins, phenolic resins, and thermosetting polyimide resins. Of these, epoxy resins are preferred in view of, for example, strength.

Examples of thermoplastic resins include polypropylene resins, polyphenylene sulfide resins, polycarbonate resins, and thermoplastic polyurethane resins.

The fiber-reinforced plastic 100 can be produced by, for example, a method including stacking a plurality of prepregs 20 illustrated in Fig. 3.

In the stacking, first, a prepreg 20 as illustrated in Fig. 3 is prepared.

The prepreg 20 can be produced by impregnating a preform structure 10 with a resin to form a resin layer 4 so as to cover the preform structure 10. When the resin used here is a thermosetting resin, an uncured thermosetting resin is used.

In the stacking, next, a plurality of prepregs 20 are stacked as illustrated in Fig. 4. Thus, a base part composed of a stack of a plurality of preform structures 10 is formed. The inside of the base part is impregnated with the resin, and the periphery of the base part is also covered with the resin layer 4.

When the resin is a thermosetting resin, the method may include curing the thermosetting resin after the stacking.

In this manner, after the stacking, the thermosetting resin can be cured to produce the fiber-reinforced plastic 100.

### Operations and effects of first exemplary embodiment

According to the exemplary embodiment, the following operations and effects can be achieved.
(1) In the exemplary embodiment, the carbon fiber 2 is disposed on the support layer 1 in a flexible design and is secured with the carbon-based thread 3. Therefore, design flexibility for the carbon fiber 2 can be enhanced.
(2) According to the exemplary embodiment, a layer composed of a carbon fiber 2 having high design flexibility can be formed on the support layer 1. Accordingly, if the support layer 1 is a carbon fiber cloth, a preform structure 10 that includes two layers, namely, a layer composed of the carbon fiber cloth and a layer composed of the carbon fiber 2 having high design flexibility, is provided.
(3) In the exemplary embodiment, if the support layer 1 is a carbon fiber cloth, all the materials of the base part can be carbon-based materials to further improve the strength of the base part.
(4) In the exemplary embodiment, delamination between the support layer 1 and the layer composed of the carbon fiber 2 can be suppressed. For example, if the support layer 1 is a glass fiber cloth, delamination between different materials, which are a glass fiber and a carbon fiber, can be suppressed.

### Second exemplary embodiment

Next, a second exemplary embodiment of the invention will be described.

The configuration of the exemplary embodiment is similar to that of the first exemplary embodiment except that preferred examples of the support layer 1 are different, and thus the point of change will be described, and a description of other features common to those in the previous description will be omitted.

In the preform structure 10 according to the exemplary embodiment, the support layer 1 is preferably a resin cloth or a resin film.

Furthermore, in a fiber-reinforced plastic 100 according to the exemplary embodiment, a resin that is a material of the resin cloth or the resin film and the resin with which the preform structure 10 is impregnated are preferably the same material.

In such a case, the support layer 1 and a resin layer 4 can be integrated with each other. When the resin that is the material of the support layer 1 is a thermoplastic resin, the support layer 1 itself can be utilized as a resin with which the preform structure 10 is impregnated, and it is not always necessary to provide a resin layer 4 separately. Furthermore, a base part that includes a layer composed of a carbon fiber 2 having high design flexibility can be formed.

According to the exemplary embodiment, in addition to the operation and effect (1) in the first exemplary embodiment, the following operation and effect (5) can be achieved.

(5) In the exemplary embodiment, since the material of the support layer 1 and the material of the resin layer 4 are the same, the support layer 1 and the resin layer 4 can be integrated with each other. In addition, a base part that includes a layer composed of a carbon fiber 2 having high design flexibility can be formed. Furthermore, a fiber-reinforced plastic 100 having this base part can be produced.

### Modifications of exemplary embodiments

The invention is not limited to the exemplary embodiments described above.

For example, in the exemplary embodiments described above, a layer composed of the carbon fiber 2 is formed only on the upper surface of the support layer 1, but the invention is not limited to this. A layer composed of the carbon fiber 2 may be formed not only on the upper surface of the support layer 1 but also on the lower surface of the support layer 1. In this manner, there is provided a preform structure that includes a layer composed of the carbon fiber 2 having high design flexibility on both surfaces of the support layer 1.

In the exemplary embodiments described above, the fiber-reinforced plastic 100 is produced by stacking a plurality of prepregs 20, but the invention is not limited to this. A plurality of preform structures 10 may be stacked to form a base part, and the base part may then be impregnated with a resin to produce a fiber-reinforced plastic 100.

In the exemplary embodiments described above, in the case of stacking a plurality of prepregs 20, the curing of a thermosetting resin is performed after the stacking, but the invention is not limited to this. For example, the prepregs 20 may be pressure-bonded by hot pressing to cure the thermosetting resin in the stacking, thus producing a fiber-reinforced plastic 100.

### EXPLANATION OF CODES

1 support layer, 11 warp thread, 12 weft thread, 2 carbon fiber, 3 carbon-based thread, 4 resin layer, 10 preform structure, 20 prepreg, 100 fiber-reinforced plastic.

## Claims

1. A preform structure (10) comprising:
a carbon fiber (2); a support layer (1) that serves as a substrate for the carbon fiber (2); and a carbon-based thread (3) for securing the carbon fiber (2) to the support layer (1), wherein
the carbon-based thread (3) is a yarn obtained by spinning two or more carbon nanotube yarns together, and
the yarn obtained by the spinning two or more carbon nanotube yarns is in a Z-spin.

2. The preform structure (10) according to claim 1, wherein the support layer (1) is at least one selected from the group consisting of a glass fiber cloth, a carbon fiber cloth, a resin cloth, and a resin film.

3. The preform structure (10) according to claim 1, wherein the support layer (1) is at least one selected from the group consisting of a glass fiber cloth and a carbon fiber cloth.

4. The preform structure according to claim 1, wherein the support layer (1) is at least one selected from the group consisting of a resin cloth and a resin film.

5. A fiber-reinforced plastic (100) comprising:
the preform structure (10) according to any one of claims 1 to 3; and
a resin with which the preform structure (10) is impregnated.

6. A fiber-reinforced plastic (100) comprising:
the preform structure (10) according to claim 4; and
a resin with which the preform structure (10) is impregnated,
wherein a resin that is a material of the resin cloth or the resin film and the resin with which the preform structure (10) is impregnated are the same material.

7. A production method for a preform structure (10), the method being a production method for the preform structure (10) according to any one of claims 1 to 4, the method comprising:
disposing the carbon fiber (2) on the support layer (1) and securing the carbon fiber (2) to the support layer (1) with the carbon-based thread (3).

8. The production method for a preform structure (10) according to claim 7, wherein the carbon fiber (2) is secured to the support layer (1) by sewing with the carbon-based thread (3).

9. The production method for a preform structure (10) according to claim 7 or 8, wherein the carbon fiber (2) is secured to the support layer (1) using an embroidery machine.

10. The production method for a preform structure (10) according to claim 7 or 8, wherein the carbon-based thread (3) has a tensile strength of 500 MPa or more.

## Patentansprüche

1. Eine Vorformstruktur (10), umfassend:
eine Kohlenstofffaser (2); eine Trägerschicht (1), die als Substrat für die Kohlenstofffaser (2) dient; und einen Faden auf Kohlenstoffbasis (3) zum Befestigen der Kohlenstofffaser (2) an der Trägerschicht (1), wobei
der Faden auf Kohlenstoffbasis (3) ein Garn ist, das durch Zusammenverspinnen von zwei oder mehr Kohlenstoffnanoröhrengarnen erhalten wird, und
das durch Spinnen von zwei oder mehr Kohlenstoffnanoröhrengarnen erhaltene Garn in Z-Spinnung vorliegt.

2. Die Vorformstruktur (10) gemäß Anspruch 1, wobei die Trägerschicht (1) mindestens eine aus der Gruppe ausgewählt ist, bestehend aus einem Glasfasergewebe, einem Kohlenstofffasergewebe, einem Harzgewebe und einer Harzfolie ist.

3. Die Vorformstruktur (10) gemäß Anspruch 1, wobei die Trägerschicht (1) mindestens eine aus der Gruppe ausgewählt ist, bestehend aus einem Glasfasergewebe und einem Kohlenstofffasergewebe besteht.

4. Vorformstruktur gemäß Anspruch 1, wobei die Trägerschicht (1) mindestens eine aus der Gruppe ausgewählt ist, bestehend aus einem Harzgewebe und einer Harzfolie ist.

5. Ein faserverstärkter Kunststoff (100), umfassend:
die Vorformstruktur (10) gemäß einem der Ansprüche 1 bis 3; und
ein Harz, mit dem die Vorformstruktur (10) imprägniert ist.

6. Ein faserverstärkter Kunststoff (100), umfassend:
die Vorformstruktur (10) gemäß Anspruch 4; und
ein Harz, mit dem die Vorformstruktur (10) imprägniert ist,
wobei ein Harz, das ein Material des Harzgewebes oder der Harzfolie ist, und das Harz, mit dem die Vorformstruktur (10) imprägniert ist, dasselbe Material sind.

7. Verfahren zur Herstellung einer Vorformstruktur (10), wobei das Verfahren ein Verfahren zur Herstellung der Vorformstruktur (10) gemäß einem der Ansprüche 1 bis 4 ist, wobei das Verfahren umfasst:
Anordnen der Kohlenstofffaser (2) auf der Trägerschicht (1) und Befestigen der Kohlenstofffaser (2) an der Trägerschicht (1) mit dem kohlenstoffbasierten Faden (3).

8. Verfahren zur Herstellung einer Vorformstruktur (10) gemäß Anspruch 7, wobei die Kohlenstofffaser (2) durch Nähen mit dem kohlenstoffbasierten Faden (3) an der Trägerschicht (1) befestigt wird.

9. Verfahren zur Herstellung einer Vorformstruktur (10) gemäß Anspruch 7 oder 8, wobei die Kohlenstofffaser (2) mit einer Stickmaschine an der Trägerschicht (1) befestigt wird.

10. Verfahren zur Herstellung einer Vorformstruktur (10) gemäß Anspruch 7 oder 8, wobei der kohlenstoffbasierte Faden (3) eine Zugfestigkeit von 500 MPa oder mehr aufweist.

## Revendications

1. Une structure de préforme (10) comprenant :
une fibre de carbone (2) ; une couche de support (1) qui sert comme un substrat à la fibre de carbone (2) ; et un filetage à base de carbone (3) pour sécuriser la fibre de carbone (2) à la couche de support (1), dans laquelle
le filetage à base de carbone (3) est un fil obtenu en filant ensemble deux ou plus de fils de nanotubes de carbone, et
le fil obtenu par le filage de deux ou plus de fils de nanotubes de carbone est dans un Z-spin.

2. La structure de préforme (10) selon la revendication 1, dans laquelle la couche de support (1) est au moins une choisie du groupe constitué d'un chiffon en fibre de verre, d'un chiffon en fibre de carbone, d'un chiffon en résine et d'un film en résine.

3. La structure de préforme (10) selon la revendication 1, dans laquelle la couche de support (1) est au moins une choisie du groupe constitué d'un chiffon en fibre de verre et d'un chiffon en fibre de carbone.

4. La structure de préforme selon la revendication 1, dans laquelle la couche de support (1) est au moins une choisie du groupe constitué d'un chiffon en résine et d'un film en résine.

5. Un plastique renforcé de fibres (100) comprenant :
la structure de préforme (10) selon l'une quelconque des revendications 1 à 3 ; et
une résine avec laquelle la structure de préforme (10) est imprégnée.

6. Un plastique renforcé de fibres (100) comprenant :
la structure de préforme (10) selon la revendication 4 ; et
une résine avec laquelle la structure de préforme (10) est imprégnée,
dans lequel une résine qui est un matériau du chiffon en résine ou du film en résine, et la résine avec laquelle la structure de la préforme (10) est imprégnée, sont le même matériau.

7. Une méthode de production pour une structure de préforme (10), la méthode étant une méthode de production pour la structure de préforme (10) selon l'une quelconque des revendications 1 à 4, la méthode comprenant :
disposer la fibre de carbone (2) sur la couche de support (1) et sécuriser la fibre de carbone (2) à la couche de support (1) avec le filetage à base de carbone (3).

8. La méthode de production pour une structure de préforme (10) selon la revendication 7, dans laquelle la fibre de carbone (2) est sécurisée à la couche de support (1) en cousant avec le filetage à base de carbone (3).

9. La méthode de production pour une structure de préforme (10) selon la revendication 7 ou 8, dans laquelle la fibre de carbone (2) est sécurisée à la couche de support (1) en utilisant une machine à broder.

10. La méthode de production pour une structure de préforme (10) selon la revendication 7 ou 8, dans laquelle le filetage à base de carbone (3) a une résistance à la traction de 500 MPa ou plus.
